# EUROPÄISCHE PATENTANMELDUNG

(11) **EP 0 632 212 A2**
(43) Veröffentlichungstag der Anmeldung: **04.01.1995**
(21) Anmeldenummer: 94109461.7
(22) Anmeldetag: 17.06.1994
(51) Int. Cl.: F16F 9/348

(54) **Kolben für einen hydraulischen Schwingungsdämpfer**

(30) Priorität: 01.07.1993 DE 4321903
(71) Anmelder: August Bilstein GmbH & Co. KG, D-58256 Ennepetal (DE)
(72) Erfinder: Angermann, Rolf, Dr.-Ing., D-58313 Herdecke (DE); Hölscher, Reinhard, Dr.-Ing., D-33154 Salzkotten (DE); Grün, Wolfgang, Dipl.-Ing., D-58256 Ennepetal (DE); Wegner, Klaus, Dipl.-Ing., D-51519 Odenthal (DE)

(57) **Zusammenfassung**

Die Erfindung betrifft einen hydraulischen Schwingungsdämpfer, insbesondere für Kraftfahrzeuge, mit einem Kolbenkörper (1), der zwei Gruppen von gegensinnig durchströmbaren Flüssigkeitskanälen (2,3) aufweist, einem mit der eine Gruppe von Flüssigkeitskanälen (2) zusammenwirkenden, auf Druckbelastung des Schwingungsdämpfers ansprechenden Ventil (4) und einem mit der anderen Gruppe von Flüssigkeitskanälen (3) zusammenwirkenden auf Zugbelastung des Schwingungsdämpfers ansprechenden Ventil (5).

Erfindungsgemäß weist der Kolben mindestens ein Überdruckventil (6) auf, das bei hohen Flüssigkeitsdrücken mindestens einen zusätzlichen Bypass durch die in der jeweiligen Belastungsrichtung nicht durchströmten Flüssigkeitskanäle (2,3) freigibt.

## Beschreibung

Die Erfindung betrifft einen Dämpfungskolben für einen hydraulischen Schwingungsdämpfer, insbesondere für Kraftfahrzeuge, mit einem Kolbenkörper, der zwei Gruppen von gegensinnig durchströmbaren Flüssigkeitskanälen aufweist, einem mit der einen Gruppe von Flüssigkeitskanälen zusammenwirkenden, auf Druckbelastung des Schwingungsdämpfers ansprechenden Ventil und einem mit der anderen Gruppe von Flüssigkeitskanälen zusammenwirkenden, auf Zugbelastung des Schwingungsdämpfers ansprechenden Ventil.

Aus der europäischen Patentschrift EP 0 275 368 ist ein Dämpfungskolben für einen Schwingungsdämpfer bekannt, dessen gegensinnig durchströmbare Flüssigkeitsdurchtrittskanäle jeweils von der einen Ringkammer durch den Kolbenkörper schräg hindurch zu dessen gegenüberliegender Seite führen und dort ihr zulaufende haben, wobei die Eintrittsöffnung der Füssigkeitsdurchtrittskanäle sich in einem Seitenrandbereich des Kolbenkörpers und die Austrittsöffnungen sich innerhalb eines umlaufenden als Ringschulter ausgebildeten Ventilsitzes befinden und von zentral eingespannten Ventilfederscheiben abgedeckt werden.

Ein anderer Kolben für einen hydraulischen Teleskop-Schwingungsdämpfer ist aus der deutschen Patentschrift DE 39 35 159 bekannt. Bei diesem Kolben sind zwei Kolbenkörper axial nebeneinander angeordnet und weisen jeweils eine Gruppe von radial innenliegenden und eine Gruppe von radial außenliegenden Durchtrittskanälen auf, wobei die außenliegenden Durchtrittskanäle in je einer Belastungsrichtung mittels zwischen den Kolbenkörpern angeordneten Rückschlagventilen verschlossen werden. Der Kolbenkörper weist weiterhin ein bei Belastung des Schwingungsdämpfers auf Druck und ein bei Belastung des Schwingungsdämpfers auf Zug ansprechendes Ventil auf, wobei jedes Ventil aus mindestens einer Ventilfederscheibe und einem Ventilsitz besteht.

Bei der Abstimmung auf ein bestimmtes Fahrwerk eines Fahrzeug typs besteht oft die Forderung, den Kennlinienverlauf der Dämpfungskräfte dahin zu verändern, daß bei sehr hohen Kolbengeschwindigkeiten die Dämpfungskräfte nur wenig zunehmen oder abnehmen, um bei hochfrequenten Anregungen den Fahrkomfort zu verbessern und eine Minimierung der Radlastschwankungen zu erreichen.

Bei den bekannten Kolbentypen kann durch die Form des Kolbenkörpers und der dadurch einsetzbaren relativ großen Federscheiben ein degressiver Kennlinienverlauf der Dämpfungskräfte bei hohen Kolbengeschwindigkeiten bewirkt werden.

Der Erfindlung liegt daher die Aufgabe zugrunde, einen Kolben für einen hydraulischen Schwingungsdämpfer zu schaffen, bei dem ohne Veränderungen am Kolbenkörper ein nur sehr gering ansteigender oder abnehmender Verlauf der Dämpfungskräfte bei hohen Kolbengeschwindigkeiten und damit auftretenden hohen Druckdifferenzen im Arbeitszylinder des Schwingungsdämpfers erzielt werden kann.

Die Aufgabe wird durch die Merkmale des Patentanspruchs gelöst, wobei die Unteransprüche vorteilhafte Ausführungsformen beschreiben.

Erfindungsgemäß weist der Kolben mindestens ein Überdruckventil auf, das bei hohen Flüssigkeitsdrücken mindestens einen Bypaß durch die in der jeweiligen Belastungsrichtung nicht durchströmten Flüssigkeitskanäle freigibt.

In einer Ausbildung ist das Überdruckventil im Kolbenkörper angeordnet. Dabei ist es vorteilhaft, daß mindestens einer der Flüssigkeitskanäle des Kolbenkörpers in der Höhe seiner Austrittsöffnung eine durch das Überdruckventil verschließbare Strömungsverbindung zu der austrittsseitigen Stirnseite des Kolbenkörpers aufweist. Das Überdruckventil kann beispielsweise als eine mit einem Ventilsitz zusammenwirkenden Federscheibe oder als federbelasteter Ventilkörper ausgebildet sein.

In einer weiteren Ausbildung ist das Überdruckventil erfindungsgemäß an den mit den Flüssigkeitskanälen zusammenwirkenden Ventilen angeordnet. Diese Ventile bestehen zum Beispiel aus je einem an der Stirnseite des Kolbenkörpers zwischen den Eintritts- und Austrittsöffungen der Flüssigkeitskanäle radial umlaufenden eine Ringkammer bildenden Ventilsitz und auf diesen aufliegenden, zentral eingespannten Federscheiben. In diesem Fall kann das Überdruckventil vorteilhafterveise aus einer zwischen dem Kolbenkörper und der auf dem Ventilsitz aufliegenden Ventilfederscheibe in der Ringkammer angeordneten Federscheibe bestehen, die bei hohen Flüssigkeitsdrücken mindestens einen Durchlaß in der Ventilfederscheibe zu den in der jeweiligen Belastungsrichtung nicht durchströmten Flüssigkeitskanälen freigibt.

Eine weitere vorteilhafte Ausführung des Überdruckventils besteht darin, daß zwischen dem Kolbenkörper und der Ventilfederscheibe in der vom Ventilsitz gebildeten Ringkammer mindestens ein federbelasteter Ventilkörper angeordnet ist, der jeweils einen Durchlaß in der jeweiligen Ventilfederscheibe bei auftretenden hohen Differenzdrücken zu den in der jeweiligen Belastungsrichtung nicht durchströmten Flüssigkeitskanälen freigibt. Der federbelastete Ventilkörper ist vorteilhafterweise kegel- oder kugelförmig ausgebildet.

In einer Ausbildung des erfindungsgemäßen Kolbens weist die auf dem Ventilsitz direkt aufliegende Ventilfederscheibe des Dämpfungsventils auf ihrem Außenumfang mindestens eine Bypass-Aussparung auf, die insbesondere bei niedrigen Kolbengeschwindigkeiten wirksam ist. Eine andere Möglichkeit zur Realisierung des Bypasses besteht darin, die direkt aufliegende Federscheibe mit mindestens einer Bypass-Bohrung zu versehen.

Der Vorteil der Erfindung besteht darin, daß mit einem derartigen Kolben Dämpfungskraftkennlinien erzeugt werden können, die im Bereich niedriger Kolbengeschwindigkeiten einen progressiven Verlauf aufweisen und im Bereich hoher Kolbengeschwindigkeiten kaum ansteigen oder abnehmen. Die Erfindung soll anhand mehrerer Ausführungsbeispiele näher erläutert werden. Die zugehörigen Zeichnungen zeigen:
- Fig. 1: einen Ausschnitt aus einem Dämpferzylinder eines Einrohr-Schwingungsdämpfers mit einem im Dämpferzylinder verschiebbar angeordneten Kolben,
- Fig. 2 bis 5: verschiedene Varianten des Überdruckventils.

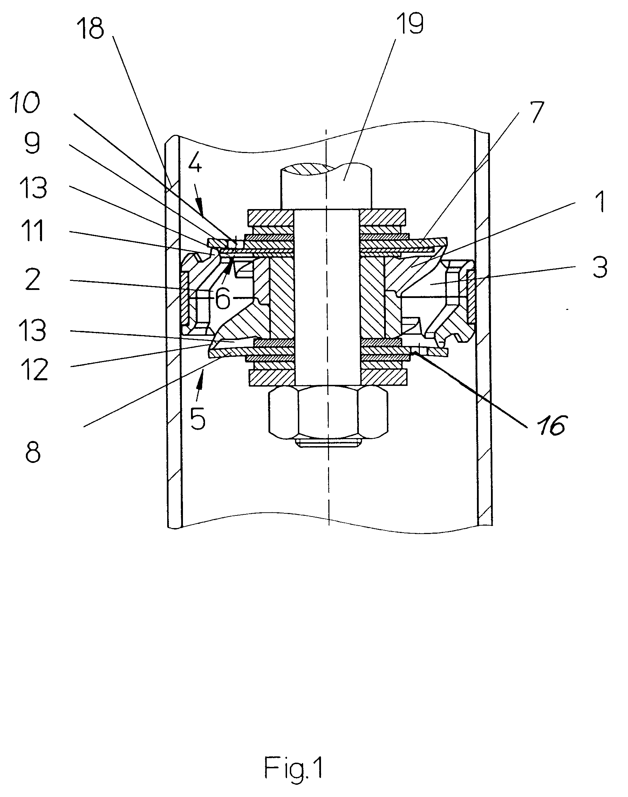

In Fig. 1 ist der Ausschnitt eines Dämpferzylinders 18 eines Einrohr-Schwingungsdämpfers mit einem im Dämpferzylinder verschiebbar angeorneten Kolben gezeigt. Der Kolben ist mit einer aus dem Dämpferzylinder 18 abdichtend herausgeführten Kolbenstange 19 verbunden und besteht im wesentlichen aus einem Kolbenkörper 1, der auf seinen beiden Stirnseiten mit je einer Ringkammer 13 versehen ist und dessen gegensinnig durchströmbare Flüssigkeitskanäle 2, 3 von einer Ringkammer 13 durch den Kolbenkörper 1 schräg hindurch zu dessen gegenüberliegender Seite führen. Der Kolben weist weiterhin ein bei Belastung des Schwingungsdämpfers auf Druck ansprechendes Ventil 4, das benachbart zu einer Stirnseite des Kolbenkörpers 1 angeordnet ist, und ein bei Belastung auf Zug ansprechendes Ventil 5, das benachbart zur anderen Stirnseite des Kolbenkörpers 1 angeordnet ist, auf. Bei dem in Fig. 1 dargestellten Kolben besteht das Ventil 4 für den Einfahrhub (Druckstufe) des Schwingungsdämpfers aus einer vorgespannten Ventilfederscheibe 7 und dem die Ringkammer 13 abschließenden umlaufenden Ventilsitz 11 und erzeugt damit den durch die Form der Flüssigkeitskanäle 2 und die Größen der Ventilfederscheiben 7 bestimmten Verlauf der Dämpfungskraftkennlinie. Das Ventil 5 für die Zugstufe des Schwingungsdämfers besteht aus mehreren vorgespannten Ventilfederscheiben und dem Ventilsitz 12, der auch hier die Ringkammer 13 umschließt. Die im geschlossenen Zustand des Ventils 5 dirket auf dem Ventilsitz 12 aufliegende Ventilfederscheibe 8 weist auf ihrem Umfang mindestens eine Bypass-Bohrung 16 auf, die im Bereich niedriger Kolbengeschwindigkeiten einen permaneten Durchlaß vom Flüssigkeitskanal 2 zum unteren Arbeitsraum des Dämpferzylinders 18 schafft.

Zur Realisierung einer kaum ansteigenden oder abnehmenden Dämpfungskraftlinie der Zugstufe des Schwingungsdämpfers im Bereich hoher Kolbengeschwindigkeiten ist die Ventilfederscheibe 7 der Druckstufenseite im Bereich der Ringkammer 13 mit mindestens einem Durchlaß 10 versehen, der im Bereich niederer und mittlerer Kolbengeschwindigkeiten in der Zugstufe von einem in der Ringkammer 13 angeordneten Überdruckventil 6 verschlossen ist.

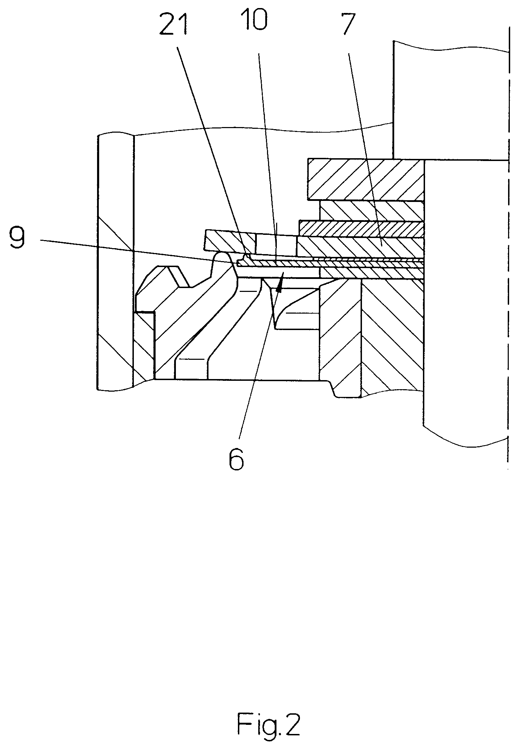

Erst im Bereich hoher Kolbengeschwindigkeiten gibt das Überdruckventil den Durchlaß 10 frei und schafft so einen zusätzlichen Bypass-Kanal durch die in der Zugstufe von der Dämpfungsflüssigkeit nicht durchströmten Flüssigkeitskanäle 2. In Fig. 1 besteht das Überdruckventil 6 aus einer zwischen dem Kolbenkörper 1 und der Ventilfederscheibe 7 angeordneten, in die Ringkammer 13 ragenden Federscheibe 9, die den Durchlaß 10 abdeckt. Die Federscheibe 9 muß nicht immer über ihren ganzen Bereich auf der Ventilfederscheibe 7 aufliegen, sondern kann eine außerhalb des Durchlasses 10 umlaufende Schulter 21 aufweisen (Fig. 2), wobei nur diese Schulter auf der Ventilfederscheibe aufliegt.

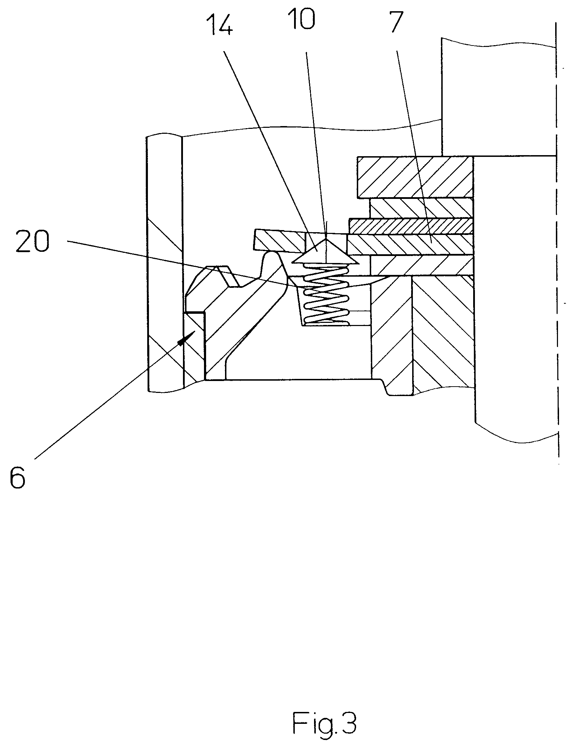

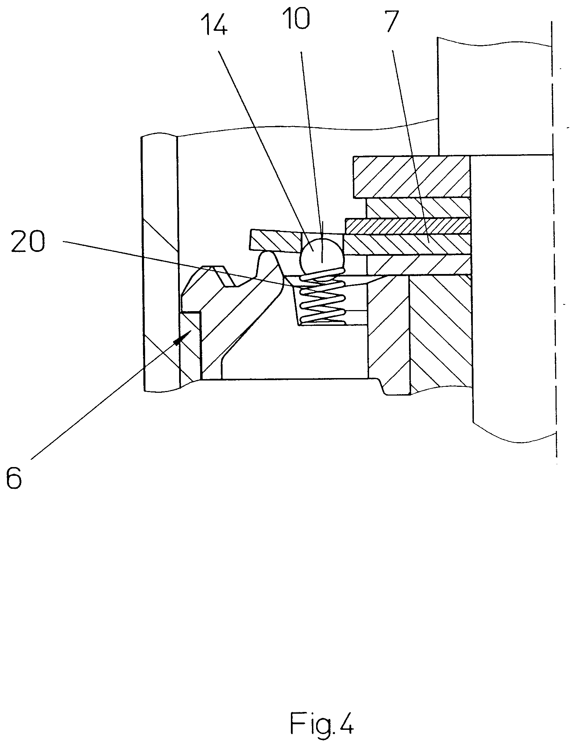

Eine andere Möglichkeit für ein Überdruckventil 6 an den mit den Flüssigkeitskanälen 2,3 zusammenwirkenden Ventilen 4 oder 5 besteht darin, einen durch eine Feder 20 vorgespannten Ventilkörper 14, der den Durchlaß 10 im Bereich niederer und mittlerer Kolbengeschwindigkeiten verschließt, vorzusehen. Dabei sind Ventilkörper 14 unterschiedlichster Formen einsetzbar. So zeigt z. B. Fig. 3 einen kegelförmigen und Fig. 4 einen kugelförmigen Ventilkörper.

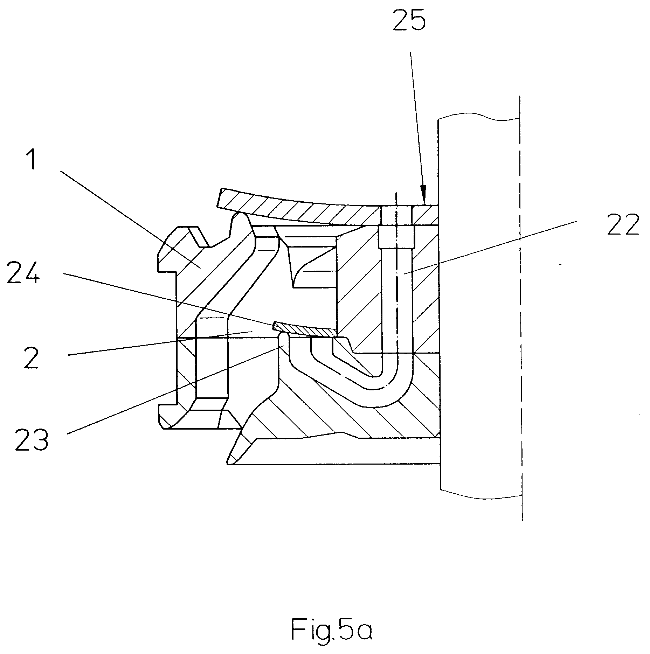

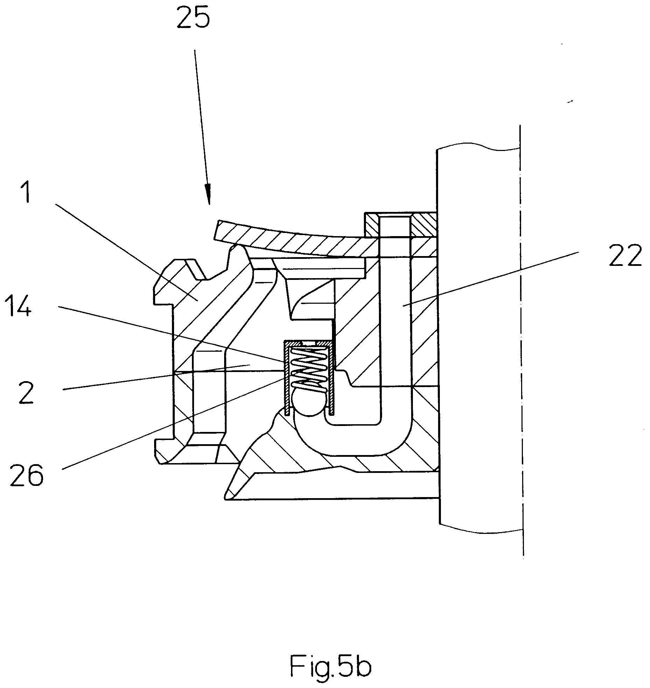

Gemäß der Erfindng wird in Fig. 5 der Bypaß zu den in der jeweiligen Belastungsrichtung nicht durchströmten Flüssigkeitskanälen 2,3 durch eine Strömungsverbindung 22 von der Austrittsseite des Flüssigkeitskanals 2 der Druckstufe zur Stirnseite 25 des Kolbenkörpers 1 gebildet.

Das Überdruckventil kann auch hier durch eine mit dem Ventilsitz 23 zusammenwirkenden Federscheibe 24 (Fig. 5a) oder durch einen mit einer Feder 26 zusammenwirkenden Ventilkörper 14 (Fig. 5b) gebildet sein.

### Bezugszeichenliste

- 1: Kolbenkörper
- 2: Flüssigkeitskanal
- 3: Flüssigkeitskanal
- 4: Ventil
- 5: Ventil
- 6: Überdruckventil
- 7: Ventilfederscheibe
- 8: Ventilfederscheibe
- 9: Federscheibe
- 10: Durchlaß
- 11: Ventilsitz
- 12: Ventilsitz
- 13: Ringkammer
- 14: Ventilkörper
- 16: Bypass-Bohrung
- 18: Dämpfungszylinder
- 19: Kolbenstange
- 20: Feder
- 21: Schulter
- 22: Strömungsverbindung
- 23: Ventilsitz
- 24: Federscheibe
- 25: Stirnseite
- 26: Feder

## Patentansprüche

1. Kolben für einen hydraulischen Schwingungsdämpfer, insbesondere für Kraftfahrzeuge, mit einem Kolbenkörper, der zwei Gruppen von gegensinnig durchströmbaren Flüssigkeitskanälen aufweist, einem mit der einen Gruppe von Flüssigkeitskanälen zusammenwirkenden, auf Druckbelastung des Schwingungsdämpfers ansprechenden Ventil und einem mit der anderen Gruppe von Flüssigkeitskanälen zusammenwirkenden, auf Zugbelastung des Schwingungsdämpfers ansprechenden Ventil, dadurch gekennzeichnet, daß der Kolben mindestens ein Überdruckventil (6) aufweist, das bei hohen Flüssigkeitsdrücken mindestens einen Bypass durch die in der jeweiligen Belastungsrichtung nicht durchströmten Flüssigkeitskanäle (2,3) freigibt.

2. Kolben nach Anspruch 1, dadurch gekennzeichnet, daß das Überdruckventil (6) im Kolbenkörper (1) angeordnet ist.

3. Kolben nach Anspruch 2, dadurch gekennzeichnet, daß mindestens einer der Flüssigkeitskanäle (2,3) an ihrer Austrittsseite mindestens eine weitere Strömungsverbindung (22) zu der austrittsseitigen Stirnseite des Kolbenkörpers (1) aufweisen, in der das Überdruckventil (6) angeordnet ist.

4. Kolben nach Anspruch 2 oder 3, dadurch gekennzeichnet, daß das Überdruckventil (6) eine mit einem Ventilsitz (23) zusammenwirkende Federscheibe (24) ist.

5. Kolben nach Anspruch 2 oder 3, dadurch gekennzeichnet, daß das Überdruckventil (6) ein federbelasteter Ventilkörper (14) ist.

6. Kolben nach Anspruch 1, dadurch gekennzeichnet, daß das Überdruckventil (6) an den mit den Flüssigkeitskanälen (2,3) zusammenwirkenden Ventilen (4,5) angeordnet ist.

7. Kolben nach Anspruch 1 oder 6, dadurch gekennzeichnet, daß die Ventile (4,5) aus je einem an den Stirnseiten des Kolbenkörpers (1) zwischen den Eintritts- und Austrittsöffnungen der Flüssigkeitskanäle (2,3) radial umlaufenden, eine Ringkammer (13) bildenden Ventilsitz (11,12) und auf diesen aufliegenden, zentral eingespannten Ventilfederscheiben (7,8) bestehen.

8. Kolben nach Anspruch 7, dadurch gekennzeichnet, daß das Überdruckventil (6) aus einer zwischen dem Kolbenkörper (1) und der Ventilfederscheibe (7 oder 8) in der Ringkammer (13) angeordneten Federscheibe (9) besteht, die bei hohen Flüssigkeitsdrücken einen Durchlaß (10) in der Ventilfederscheibe (7 oder 8) zu den in der jeweiligen Belastungsrichtung nicht durchströmten Flüssigkeitskanälen (2,3) freigibt.

9. Kolben nach Anspruch 7, dadurch gekennzeichnet, daß das Überdruckventil (6) aus einem zwischen dem Kolbenkörper (1) und der Ventilfederscheibe (7 oder 8) in der Ringkammer (13) angeordneten, federbelasteten Ventilkörper (14) besteht, der einen Durchlaß (10) in der jeweiligen Federscheibe (7 oder 8) zu den in der jeweiligen Belastungsrichtung nicht durchströmten Flüssigkeitskanälen (2,3) freigibt.

10. Kolben nach Anspruch 5 oder 9, dadurch gekennzeichnet, daß der Ventilkörper (14) kugelförmig ausgebildet ist.

11. Kolben nach Anspruch 10, dadurch gekennzeichnet, daß der Ventilkörper (14) kegelförmig ausgebildet ist.

12. Kolben nach einem der Ansprüche 1 bis 11, dadurch gekennzeichnet, daß die auf dem Ventilsitz (11,12) direkt aufliegende Ventilfederscheibe (7,8) auf ihrem Außenumfang mindestens eine Bypass-Aussparung aufweist.

13. Kolben nach einem der Ansprüche 1 bis 11, dadurch gekennzeichnet, daß die auf dem Ventilsitz (11,12) direkt aufliegende Federscheibe (7,8) mindestens eine Bypass-Bohrung (16) aufweist.
